# EUROPEAN PATENT SPECIFICATION

(11) **EP 0 968 093 B1**
(45) Date of publication and mention of the grant of the patent: **12.06.2002**
(21) Application number: 98911782.5
(22) Date of filing: 18.03.1998
(51) Int. Cl.: B60B 3/04, B23K 33/00

(54) **STRUCTURE AND METHOD FOR CONNECTING RIM AND DISK INTEGRATED WHEELS**
KONSTRUKTION UND VERFAHREN ZUM VERBINDEN VON FELGE UND SCHEIBE IN INTEGRIERTEN RÄDERN
STRUCTURE ET PROCEDE SERVANT A CONNECTER LA JANTE ET LE DISQUE DE ROUES INTEGREES

(30) Priority: 19.03.1997 BR 9701349
(43) Date of publication of application: 05.01.2000
(73) Proprietor: Meritor Dobrasil S/A, Troy, MI 48084 (US)
(72) Inventor: MIKAMI, Celestino, CEP-13486-215 Limeira, SP (BR)
(74) Representative: Sties, Jochen, Dipl.-Ing.
(86) International application number: US9805336
(87) International publication number: WO9841410

(56) References cited:
- WO-A-85/02586
- WO-A-96/18753
- WO-A-97/47482
- GB-A- 434 044
- US-A- 5 345 676
- PATENT ABSTRACTS OF JAPAN vol. 017, no. 123 (M-1380), 15 March 1993 & JP 04 305388 A (TOPY IND LTD), 28 October 1992,

## Description

The invention relates to a unique connection between a rim and a disk in an integrated wheel.

Integrated wheels are known, in which a disk provides the entire forward face of the wheel. A rim is attached to a rear face of the disk, and provides the other structure for properly mounting the tire.

From JP-A-04305388 is known an integrated wheel comprising a disk member having a forward face and a rear face, the rear face being formed with a groove extending into an otherwise generally planar surface, the groove being formed with at least one angled surface at one radial extent of the groove, and a rim having an axial end welded within the groove.

From WO-A-8502586 is known an integral wheel comprising a disk member having a groove, and a rim having an axial end welded to the groove.

From WO-A-9618753 is known an integrated wheel comprising a disk member, a groove, and a rim, which is welded into the groove on each radial side of the rim.

The object of the invention is to improve upon the shape of the groove and the portion of the rim received in the groove.

This object is achieved with an integrated wheel comprising a disk member having a forward face and a rear face, and said rear face being formed with a groove extending into an otherwise generally planar surface, said groove being formed with opposed angled surfaces at each radial extent of said groove, and a connecting rectangular surface connecting said two angled surfaces, said rectangular surface being generally perpendicular to an axis of rotation of said wheel, and a rim member having an axial end welded within said groove, said axial end of said rim also having opposed angled surfaces with a generally planar connecting surface between said angled surfaces, and said generally planar surface of said axial end in combination with said generally rectangular surface of said groove ensuring proper axial positioning, one of said angled surfaces of said groove together with one of said angled surfaces of said rim end being appropriately angled so as to abut and to ensure radial concentricity of the wheel, the other of said angled surfaces of said groove together with the other of said angled surfaces of said rim end allowing a weld material to secure the rim member to the disc member. The term "angled surface of the groove" is here used to designate a surface which is inclined in relation to the plane in which the groove is cut. The term "angled surface of the rim" is here used to designate a surface which is inclined in relation to the axial direction of the wheel.

These and other features of the present invention can be best understood from the following specification and drawings, the following of which is a brief description.
Figure 1 is a side view of an integrated wheel showing features of the present invention.
Figure 2 shows a groove in the disk of the wheel of figure 1.
Figure 3 shows a rim end of the rim of the wheel of figure 1.
Figure 4 shows in an enlarged view of a portion of Figure 1 showing the connection of the rim to the disk.

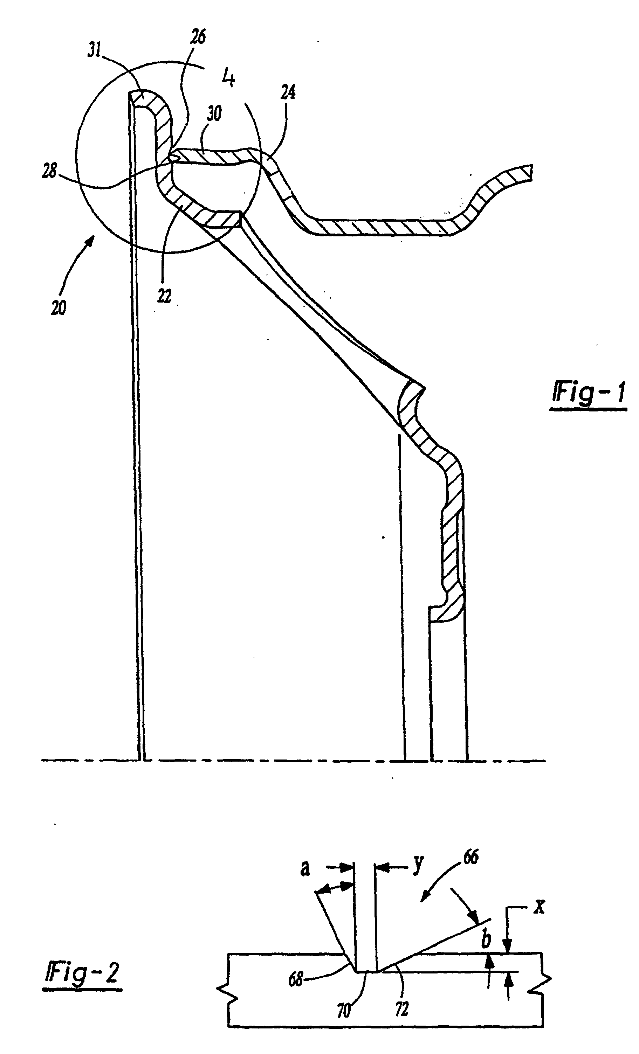

Figure 1 shows an integrated wheel 20 having a disk 22 secured to a rim 24. As shown, a weld joint 26 is placed near a groove 28 to secure an end 30 of the rim 24. The preferred shapes of the groove and rim will be detailed below. As shown at 31, the radially and axially outermost portion of the disk is curved. A feature of this invention is the unique way that this surface is formed, as will be explained below. This shape is particularly well-suited for a wheel wherein the disk is to be painted.

Figure 2 shows a groove 66 with three surfaces 68,70 and 72. Surface 68 is set forth at an angle a, which is intended to facilitate the attachment of the rim into the disk groove. Surface 70 extends for a dimension y, and surface 3 is angled at an angle b, which again functions to receive the weld material.

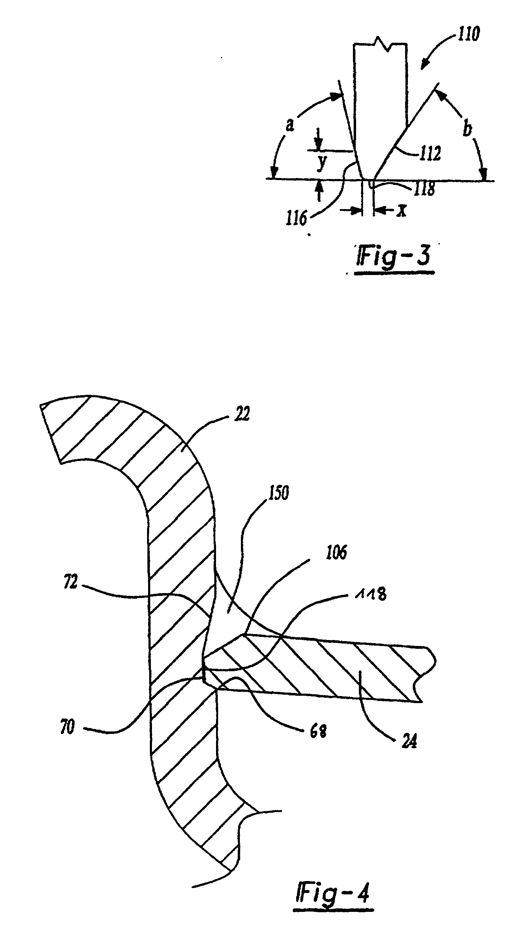

Figure 3 shows a rim 110 having a surface 112 defined at an angle b which is for weld material. A second flat surface 114 extends over a distance x and assists in the resting of the rim in the groove. A surface 116 extends upwardly for a distance y at an angle a, and facilitates the attachment of the rim into the disk groove. This rim is particularly well-suited for the groove shown in Figure 5.

Figure 4 shows the assembly such as shown in Figure 1. This combination combines the Figure 2 groove 66 with the Figure 3 rim 110. The surface 68 in combination with the surface 116 includes appropriate angles to ensure correct positioning and assembly, and to ensure the radial concentricity of the final wheel.

The flat surface 70 in combination with the flat surface 114 ensures proper axial positioning. The angled surface 72, in combination with the angled surface 112 ensures that the weld material does secure the two members together. The weld material 150 is shown as a large bead which will secure the rim to the disk.

The present invention improves upon the prior art systems which have provided a rim received within a groove, by improving upon the structure of the groove and the rim. With the present invention, correct positioning of the rim relative to the disk is much more likely to be achieved. Further, a very reliable connection is assured with this invention.

Preferred embodiments of this invention have been disclosed, however, a worker of ordinary skill in the art would recognize that certain modifications would come within the scope of this invention. For that reason, the following claims should be studied to determine the true scope and content of this invention.

## Claims

1. An integrated wheel comprising a disc member (22) having a forward face and a rear face, and said rear face being formed with a groove (66) extending into an otherwise generally planar surface, said groove being formed with opposed angled surfaces (68, 72) at each radial extent of said groove, and a connecting rectangular surface (70) connecting said two angled surfaces, said rectangular surface (70) being generally perpendicular to an axis of rotation of said wheel, and a rim member (24) having an axial end (110) welded within said groove (66), said axial end of said rim also having opposed angled surfaces (112, 116) with a generally planar connecting surface (118) between said angled surfaces (112, 116), and said generally planar surface (118) of said axial end in combination with said generally rectangular surface (70) of said groove ensuring proper axial positioning, one (68) of said angled surfaces of said groove (66) together with one (116) of said angled surfaces of said rim end being appropriately angled so as to abut and to ensure radial concentricity of the wheel, the other (72) of said angled surfaces of said groove (66) together with the other (112) of said angled surfaces of said rim end allowing a weld material to secure the rim member to the disc member.

## Patentansprüche

1. Integriertes Rad mit einem Scheibenelement (22) mit einer Vorderseite und einer Rückseite, wobei in der Rückseite eine Nut (66) ausgebildet ist, die in einer ansonsten im wesentlichen ebenen Fläche verläuft, wobei die Nut an jeder radialen Ausdehnung mit einander gegenüberliegenden, schrägen Flächen (68, 72) sowie mit einer die beiden schrägen Flächen verbindenden rechteckigen Verbindungsfläche (70) gebildet ist, wobei die rechteckige Fläche (70) im wesentlichen senkrecht zu einer Rotationsachse des Rades ist, und mit einem Felgenelement (24), welches mit einem axialen Ende (110) in die Nut (66) geschweißt ist, wobei das axiale Ende der Felge ebenfalls einander gegenüberliegende, schräge Flächen (112, 116) mit einer im wesentlichen ebenen Verbindungsfläche (118) zwischen den schrägen Flächen (112, 116) aufweist, und wobei die im wesentlichen ebene Fläche (118) des axialen Endes in Kombination mit der im wesentlichen rechteckigen Fläche (70) der Nut eine korrekte axiale Positionierung sicherstellt, wobei eine (68) der schrägen Flächen der Nut (66) und eine (116) der schrägen Flächen des Felgenendes zusammen in geeigneter Weise so unter einem Winkel angeordnet sind, daß sie aneinander anliegen und eine radiale Konzentrizität des Rades sicherstellen, wobei die andere (72) der schrägen Flächen der Nut (66) und die andere (112) der schrägen Flächen des Felgenendes zusammen ermöglichen, daß ein Schweißwerkstoff das Felgenelement an dem Scheibenelement befestigt.

## Revendications

1. Roue intégrée comportant un élément de disque (22) avec une face antérieure et une face postérieure, et la face postérieure étant réalisée avec une gorge (66) qui s'étend dans une surface autrement sensiblement plane, la gorge étant formée sur chaque extension radiale avec des surfaces obliques (68, 72) opposées l'une à l'autre ainsi qu'avec une surface de liaison (70) rectangulaire reliant les deux surfaces obliques, la surface rectangulaire (70) étant sensiblement perpendiculaire à un axe de rotation de la roue, et comprenant un élément de jante (24) qui est soudé par une extrémité (110) axiale dans la gorge (66), l'extrémité axiale de la jante présentant également des surfaces obliques (112, 116) opposées l'une à l'autre avec une surface de liaison (118) sensiblement plane entre les surfaces obliques (112, 116), et la surface (118) sensiblement plane de l'extrémité axiale assurant un positionnement axial correct, une (68) des surfaces obliques de la gorge (66) et une (116) des surfaces obliques de l'extrémité de la jante étant agencées ensemble de manière appropriée sous un angle tel qu'elles sont appliquées l'une contre l'autre et assurent une concentricité radiale de la roue, l'autre surface oblique (72) de la gorge (66) et l'autre surface oblique (112) de l'extrémité de la jante permettant ensemble qu'un matériau de soudure fixe l'élément de jante sur l'élément de disque.
